# EUROPEAN PATENT SPECIFICATION

(11) **EP 1 447 004 B1**
(45) Date of publication and mention of the grant of the patent: **31.12.2008**
(21) Application number: 04250800.2
(22) Date of filing: 16.02.2004
(51) Int. Cl.: A21B 2/00, A21B 3/00

(54) **Improvements in an apparatus for heating a food product**
Vorrichtung thermischen Behandlung eines Nahrungsmittelprodukts
Appareil de traitement thermique d'un produit alimentaire

(30) Priority: 17.02.2003 GB 0303585
(43) Date of publication of application: 18.08.2004
(73) Proprietor: Tomlinson, John Randall, Gunnislake, Cornwall PL18 9EY (GB)
(72) Inventor: Tomlinson, John Randall, Gunnislake, Cornwall PL18 9EY (GB)
(74) Representative: Shelley, Mark Raymond

(56) References cited:
- GB-A- 2 265 545
- GB-A- 2 336 288

## Description

The present invention relates to an apparatus for local heating of a food product in a container, and in particular relates to an apparatus for use in grilling or browning the surface of a food product in a container.

Due to consumer demand and the lifestyle of many people, it has become increasingly popular over the last decade or so for food manufacturers to supply prepared convenience food or "ready meals" to the general consumer for consumption. Such ready meals or convenience food products are commonly sold through major supermarket outlets, at general food shops and kiosks. The packaged food products are normally sold uncooked, partially cooked or fully cooked. The food products may then be prepared for consumption by cooking in a conventional oven or heating in a microwave oven. By microwave heating a convenience food product, it is generally not possible however to grill or brown a surface of the food product. Consequently, the meal may have a white or pale surface and the texture of the surface may be soft. This is generally not appealing to the consumer and for some food products where it is particularly desired to have a grilled, browned, or slightly hardened surface, these products may be unpalatable. In particular, for certain food products, for example, pasta dishes, baked foods, potato-topped dishes and puddings it is generally expected that such food products should have a grilled or crisp surface appearance.

It is generally not possible or very difficult to grill or brown a surface of a food product whilst heating the product in a microwave oven. Convenience food products are typically held in plastics containers made from, for example, polyethylene terephthalate (PET), which cannot withstand the temperature required to grill or brown the food products. Grilling or browning a food product in such a plastics container typically causes the container to distort, the rim portion and the walls of the container especially being prone to distortion or, even, melting if the temperature of the heat applied is sufficiently intense.

GB 2 265 545 A discloses an apparatus for the preparation of a food product having a cooked upper surface. The apparatus comprises a heat source, a conveyor for containers for products to be subjected to heat from the heat source and means for directing source of cooling fluid such as compressed air onto portions of the containers while they move along the conveyor. The means for directing the cooling fluid onto the containers may be ducts, which direct the containers in their movement along the conveyor.

There has now been developed an improved apparatus and a process for use in heating a surface of a product, in particular a food product, which may advantageously protect a part of the container from overexposure to heat and prevent or inhibit distortion of the container. Furthermore, there has been developed an efficient procedure for grilling the surface of a microwaveable food product.

According to a first aspect of the invention, there is provided apparatus for use in local heating of a food product in an upwardly open container as claimed in Claim 1.

In embodiments, there is provided apparatus for use in preparing a food product in a container, comprising:
means for conveying containers of a food product past a heat source for heating a surface of the food product in the containers as they pass, heat barrier means for preventing or at least inhibiting exposure to heat of at least a portion of the containers whilst allowing, in use, the transmission of heat to substantially the entirety of the surface of the food product in the containers, there being means for guiding a flow of a heat-exchange medium through the heat barrier means whereby to prevent overheating thereof.

In embodiments, there is provided apparatus for use in gril ling or browning a surface of a food product in a container.

It is preferred that the part of the container protected from overheating is at least part of a perimeter or rim portion of the container. Advantageously, embodiments of the invention can prevent or at least inhibit exposure of a perimeter or rim portion of a container to heat, thereby preventing or at least inhibiting distortion of this part of the container.

Embodiments of the invention comprise means for conveying containers of a food product past a heat source for heating a surface of the food product in the containers. In a preferred embodiment, the conveying means may comprise a conveyer belt, such as, for example, a wire belt conveyor or a polyurethane conveyer. In an alternative embodiment, the containers may be moved along a static surface automatically or manually. Advantageously the food product, or other heatable product, in the containers can be heated in an expeditious manner.

The heat shielding means may preferably comprise or include means for guiding a flow of a heat transfer fluid therethrough. The guiding means may include one or more passageways or channels.

The heat shielding means may preferably have a window or aperture. In a preferred embodiment, the heat shielding means has a plurality of windows or apertures for heating a food product in one or more containers, preferably a plurality of containers. This is particularly advantageous because more than one food product in containers can be heated at the same time. The apparatus may comprise a plurality of heat shielding means, each having a plurality of windows.

It is desirable that the or each window or aperture of the heat shielding means substantially corresponds with the size of the opening of the or each container of food product. When heating the surface of a food product, it is desirable that at least part of the heat shielding or barrier means is above at least part of the or each container to be protected from overheating for at least a predetermined time duration. In a preferred embodiment, when heating a food product, the one or more passageways or channels for guiding the flow of a heat transfer fluid through the heat shielding means of the apparatus is located above the perimeter or rim portions of the or each container to be protected from exposure to heat from the heat source for a predetermined time duration.

In a particularly preferred embodiment of the apparatus of the invention, the heat shielding means is in the form of a substantially enclosed body having one or more interconnecting passageways or channels for guiding a heat transfer fluid therethrough.

The heat shielding means may preferably have a plurality of such interconnecting passageways or channels. It is desirable that the body of the heat shielding means is unitary. The apparatus may protect substantially the entire perimeter or rim portion of the or each container from overexposure to heat from the heat source thereby preventing or inhibiting distortion of the perimeter part of the containers. It is important that the structural integrity of the perimeter of the containers may be substantially maintained so as to allow a cover or lid to be sealed to the perimeter of each container after the food product or other product has been subjected to sufficient heating.

The heat shielding means of the apparatus may have at least one inlet opening for the introduction or supply of a heat transfer fluid thereinto. The heat shielding means may also have at least one outlet opening for the heat transfer fluid to be extinguished therefrom.

The step of conveying the containers along the conveying means may typically be referred to as the indexing cycle. The step of heating substantially the entirety of the surface of a food product in the containers may typically be referred to as the dwell cycle.

In the indexing cycle, it is preferred that the heat shielding means may be upwardly spaced from the containers. In the dwell cycle, the space between the heat shielding means and the perimeter of the containers may be substantially minimal, caused either by adjusting the height of the heat shielding means or the conveying means, so that at least part of the hear shielding means may be substantially adjacent the perimeter of the or each container so as to advantageously optimise the heat shielding effect of the heat shielding means. The heat transfer fluid flowing through the heat shielding means may also assist in cooling the perimeter of the containers.

The heat shielding means may be adjusted between each respective raised and lowered position at the predetermined time interval. When the heat shielding means is in a raised position, the containers of food product may be moved by the conveying means to rest below a predetermined portion of the heat shielding means. The predetermined portion may desirably be a window or aperture. When the heat shielding means is in a lowered position, the surface of a food product in the containers may be subjected to heat from the heat source.

During use of the apparatus of embodiments of the invention, is it desired that the heat source may continuously emit heat. Consequently, at least part of the food product in the containers may be substantially continually heated during the dwell cycle and the indexing cycle. Advantageously, this may enhance the grilling effect on the surface of the food product.

The heat shielding means may be arranged to be adjusted between raised lowered positions in one or more cycles; preferably a plurality of cycles. The step of conveying the containers along the conveying means, when the heat shielding means is in a raised position, may be referred to as the indexing cycle. The step of heating substantially the entirety of the surface of the food product, when the heat shielding means is in a lowered position, may be referred to as dwell cycle.

The apparatus of the embodiments of the invention may be used to heat food product in a container for a duration of about 5 seconds to 300 seconds; preferably for a duration of about 60 seconds to 180 seconds; more preferably for about 120 seconds.

It is preferred that a food product in the or each container is heated in one or more dwell cycles for a predetermined time duration; preferably in a plurality of cycles, in which each dwell cycle has a predetermined time duration. The food product may be heated for 2 to 50 cycles, each cycle being of about 1 to 40 seconds duration. Preferably, the food product in a container may be heated for 25 to 40 cycles, in which each cycle may be of about 2 to 10 seconds duration. Typically, the number of cycles and the heating time may be determined by the type of food product to be grilled.

The heat shielding means of the apparatus may have a plurality of windows or apertures of a uniform size for heating a food product in certain sized containers. If it is desired to heat a food product in a different sized container, a heat shielding means having a different size of aperture, which preferably corresponds with the size of the opening of the containers, may be used.

Alternatively, the heat shielding means may have a plurality of windows of one or more different sizes which is advantageous for heating a food product in different sized containers.

Furthermore, the heat shielding means may have a plurality of windows in a plurality of rows for heating a food product in containers along the conveying means in a plurality of rows.

The apparatus of embodiments of the invention may be used to heat the surface of a food product, or any other product which can be subjected to heating, in a plastics container. The apparatus of the embodiments of the invention has particular utility for grilling or browning the surface of a food product, such as, for example, a convenience food or a "ready meal" which can then be heated in a microwave by a consumer in the home or other suitable environment. An advantage of embodiments of the invention is that it can be used to produce a grilled food product which may be comparable to the appearance of a food product cooked in a conventional oven.

Using the apparatus of embodiments of the invention, a surface of a food product in the containers can be heated by the heat source substantially simultaneously. The heat source may desirably be a radiant heat source.

The heat transfer fluid introduced into the heat shielding means may be a fluid at ambient temperature, or, alternatively, may be a cooled fluid. The fluid may be a gas, which is preferably air. Alternatively the fluid may be a liquid, which is preferably water. The heat transfer fluid which flows or circulates through the heat shielding means during operation of the apparatus, preferably being guided along one or more passageways or channels of the heat shielding means, may help to keep the heat shielding means cool and reduce the effect of heat from the heat source. The heat transfer fluid which may then be extinguished from the heat shielding means may have a higher temperature than the fluid entering the heat shielding means as a result of the fluid withdrawing heat from the body of the heat shielding means.

The apparatus of embodiments of the invention may also comprise means for cooling a part of the or each container of a food product as the containers are transported by the conveying means. The part of the containers which may be cooled so as to reduce the effect of heat from the heat source may be the wall. The cooling means may preferably comprise means for directing a fluid, which is preferably cooled, on to the walls of the containers. In one embodiment, the cooling means may have one or more slots or apertures for directing the fluid on to the containers.

In a preferred embodiment, the cooling means may be in the form of one or more channels or ducts substantially adjacent to one or more side walls of the containers as they move along the conveying means. The cooling means may have at least one inlet opening for the introduction of the fluid.

Downstream of the heating operation, the perimeter or rim portion of the containers may be scaled with a cover or lid.

According to embodiments of the invention, there is provided a process for use in local heating of a food product in an upwardly open container, in which a part of the container is protected from overheating by providing heat shielding means through which a heat transfer fluid is caused to flow.

According to embodiments of the invention, there is provided a process for use in preparing a food product in a container, comprising:
conveying containers of a food product past a heat source for heating a surface of the food product in the containers,
providing heat barrier means for preventing or at least inhibiting exposure to heat of at least a portion of the containers whilst allowing, in use, the transmission of heat to substantially the entirety of the surface of the food product in the containers, and
providing means for guiding a flow of a coolant heat-exchange medium through the heat barrier means whereby to prevent overheating thereof.

According to embodiments of the invention, there is provided a process for use in grilling or browning a surface of a food product in a container using the apparatus of the invention.

It is preferred that the process of embodiments of the invention may comprise conveying containers of a food product past a heat source for heating a surface of the food product in the containers.

It is preferred that the process of embodiments of the invention may comprise guiding a flow of heat transfer fluid through the heat shielding means of the apparatus.

The process of embodiments of the invention may comprise heating food product in the or each container for a time duration of about 5 seconds to about 300 seconds; preferably for 60 seconds to 180 seconds; more preferably for 120 seconds.

The process may preferably comprise heating a food product in one or more dwell cycles of a predetermined time duration.

The process of embodiments of the invention may further comprise cooling a part of the or each container, such as a side wall portion. A coolant fluid may be directed on to the side walls of the containers.

A preferred embodiment of the invention shall now be described by way of example only with reference to the accompanying drawings, in which;
Figure 1 is a perspective exploded view of parts which may be arranged to form an apparatus embodying the invention;
Figure 2 is an end view of the apparatus of Figure 1 in which a product in a container is being subjected to heat; and
Figure 3 is an end view of the apparatus of Figure 1 in which a container is being moved along a conveyer means.

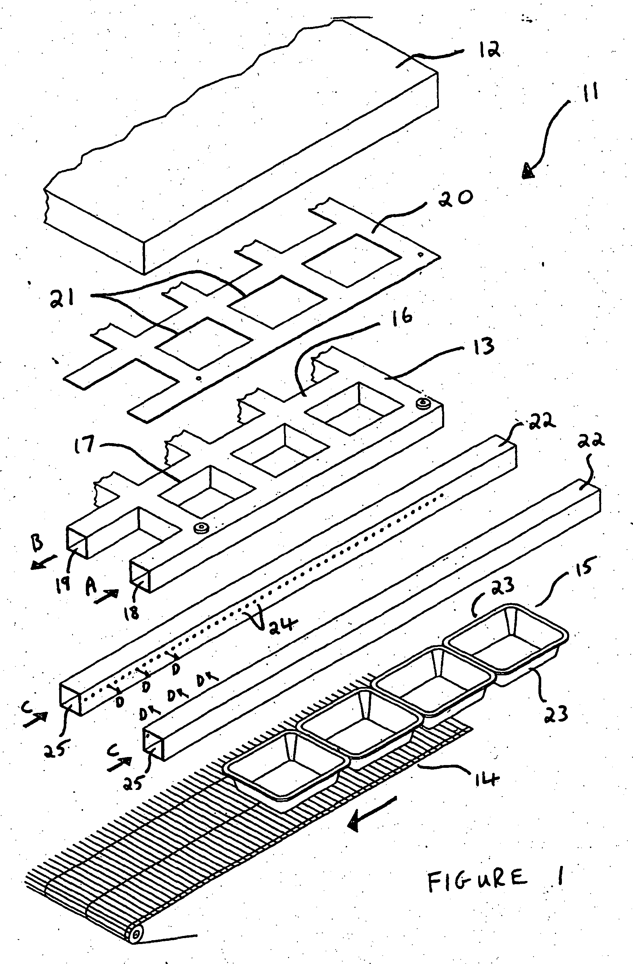

Referring to Figure 1, there is shown parts of an apparatus embodying the invention generally designated by reference numeral 11. The apparatus 11 has an electrical heat source 12, a heat shielding body 13, and a conveyer belt 14 for transporting a product in containers 15. The heat shielding body 13 has a plurality of interconnecting channels 16 for guiding a heat transfer fluid therethrough. The heat shielding body 13 is preferably a unitary body. The body 13 also has a plurality of windows or apertures 17 defined by the channels 16. There is an inlet opening 18 for the supply of the heat transfer fluid, indicated by arrow A, into the heat shielding body 13; there is also an outlet opening 19 for the heat transfer fluid to be extinguished, indicated by arrow B, from the heat shielding body 13. It is preferred that the heat transfer fluid is in a gaseous form, for example air, or, alternatively the heat transfer fluid may be in a liquid form, for example water. It is desirable that the heat transfer fluid is at ambient temperature or, perhaps cooled, as it is introduced into the body 13 in order to decrease the temperature of the frame of the body 13 thereby transferring heat to the fluid itself. As the fluid is extinguished from the body 13 through outlet 19 it may have a higher temperature than that of the fluid as it enters the body 13. If the heat transfer fluid is air, it may be preferred to provide means to blow the air into the body 13. The passage of the heat transfer fluid through the channels 16 of the heat shielding body 13 is shown by the direction arrows.

In this embodiment of the apparatus 11, there is provided a plate member 20 having apertures 21, which may be attached to a top face of the heat shielding body 13. The windows 21 of the plate member 20 correspond in size with the windows 17 of the body 13. The plate member 20 may improve the heat shielding effect of the body 13. The body 13 and plate member 20 may be made of any suitable material, for example stainless steel.

In the arrangement of the apparatus 11, there is a heater 12 located above the heat shielding body 13. The heater 12 is powered to produce a sufficient amount of heat to grill or brown a surface of a food product in the containers 15.

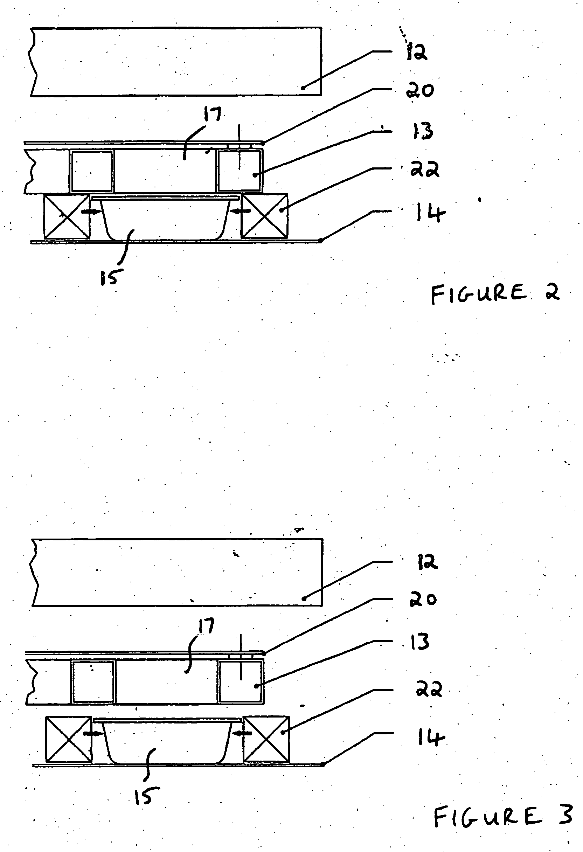

The apparatus 11 also has ducts 22 located adjacent to side walls 23 of the containers 15 as they move along the conveyer belt 14 (see Figures 2 and 3). The ducts 22 have a plurality of apertures 24 on an inner face thereof for directing a coolant fluid on to the side walls of the containers 15 in order to cool the walls of the containers 15. The ducts 22 have an inlet opening 25 for the introduction of the coolant fluid into the ducts 22. In this embodiment, the coolant fluid is air which is blown into the ducts 22 by any suitable means (not shown). The air blown into the ducts 22 is indicated by arrows C, and arrows D indicate the direction of the air as it leaves the ducts 22 through the apertures 24 in order to cool the walls of the containers 15.

Referring to Figures 2 and 3, the plastics containers 15 which contain a food product are moved along a conveyer belt 14. In this embodiment, the conveyer belt 14 is a wire belt conveyer. The heat shielding body 13 is arranged to be adjusted between a raised position (see Figure 3) and a lowered position (see Figure 2). When the heat shielding body 13 is in a raised position shown in Figure 3, the containers 15 may be moved along the conveyer 14 until a container rests below an aperture 17 of the heat shielding body 13. The container is now in a position in which a surface of a food product therein can be heated. When the heat shielding body 13 is adjusted to a lowered position shown in Figure 2, the heater 12 emits heat to the surface of the food product. The channels 16 of the heat shielding body 13 are arranged to overlie a perimeter or rim portion of the container so as to protect this part of the container from the heat irradiating from the heater 12. The heat shielding body 13 serves to prevent or inhibit any distortion of the perimeter or rim portion of each container 15 as a food product is heated.

The food product in each container may be heated for a sufficient time to grill or brown the surface of the food product. The heating could be applied continuously in order to grill the food product in one pass or cycle. Alternatively, in this embodiment, the food product in each container may be heated for a sufficient time under a plurality of the apertures 17 of the body 13 wherein after a plurality of heating cycles (or dwell cycles) the surface of the food product may be grilled to a desired effect. Between each heating cycle, there is a time interval in which each container may be moved along the conveyer 14 to rest below the next aperture 17 of the body 13. As each container is moved between apertures 17, the heat source 12 may continuously emit heat. This process enhances the operation of the invention and the required grilling effect of the food product. If any part of the containers 15 have become hot during the time in which they move along the conveyer belt 14 (that is, the indexing cycle), which may be of about 1 to 4 seconds duration, then the containers 15 may be allowed to cool during the heating or dwell cycle. It has been found that heating the surface of a food product for about 2 to 10 seconds per dwell cycle for a total of 10 to 40 cycles is particularly effective in producing a grilled product.

As the containers 15 move along the conveyer 14 the ducts 22 may be used to direct air on to the walls of the containers 15 to ensure that they are kept cool.

The containers may then be conveyed downstream of the apparatus 11 in which means may be provided for sealing a cover or lid on to the perimeter of each container. The food product is suitable for microwave heating and advantageously has a grilled surface which may not normally be obtained by microwave heating

## Claims

1. Apparatus for local heating of a food product, comprising an upwardly open container (15) to hold said food product, wherein a part (23) of the container is protected from overheating by heat shielding means (13) through which a heat transfer fluid is caused to flow **characterised in that** the heat shielding means is arranged to be adjustable between a raised position and a lowered position.

2. Apparatus according to Claim 1, wherein the part of the container protected from overheating is at least part of the container perimeter.

3. Apparatus according to Claim 1 or 2 further comprising means (14) for conveying a plurality of containers of a food product past a heat source for heating a surface of the food product in the containers.

4. Apparatus according to any of Claim 1 to 3, wherein the heat shielding means comprises at least one window or aperture (17) for heating a food product in at least one container.

5. Apparatus according to Claim 4, in which the or each window or aperture substantially corresponds to the size of the opening of the or each container.

6. Apparatus according to any of Claims 3 to 5, in which the said conveying means is arranged to be adjustable between a raised position and a lowered position.

7. Apparatus according to Claim 6, in which the heat shielding means is adjustable between each respective position at a predetermined time interval.

8. Apparatus according to any preceding claim further comprising means (22) for cooling part of the or each container.

9. Apparatus according to Claim 8, wherein the part of the container is a wall (23).

10. Apparatus according to Claim 8 or 9, in which the cooling means comprises means for directing a cooling fluid onto part of the or each container.

11. Apparatus according to any of Claims 8 to 10, wherein the cooling means is in the form of one or more channels or ducts substantially adjacent to one or more walls of the or each container.

12. Apparatus according to any of Claims 1 to 11, for use in grilling or browning a surface of said food product in said container.

13. Apparatus according to Claim 12, wherein the food product is a prepared convenience food. .

14. Apparatus according to Claim 12 or Claim 13, wherein the food product which has been grilled or browned can be subjected to microwave heating.

## Patentansprüche

1. Vorrichtung für die örtliche Erhitzung eines Nahrungsmittelprodukts, bestehend aus einem oben offenen Behälter (15) zur Aufnahme des besagten Nahrungsmittelprodukts, wobei ein Teil (23) des Behälters gegen Überhitzen durch eine Hitzeschildvorrichtung (13) geschützt ist, durch welches eine Wärmetransportflüssigkeit geführt wird,
**dadurch gekennzeichnet, dass** die Hitzeschildvorrichtung so angeordnet ist, dass sie zwischen einer gehobenen und einer gesenkten Position verstellbar ist.

2. Vorrichtung gemäß Anspruch 1, **dadurch gekennzeichnet, dass** der gegen Überhitzen geschützte Teil des Behälters mindestens einen Teil des Behälterumfangs darstellt.

3. Vorrichtung gemäß Anspruch 1 oder 2, die außerdem eine Fördervorrichtung (14) enthält, die mehrere Behälter für ein Nahrungsmittelprodukt an einer Wärmequelle zum Erhitzen einer Oberfläche des Nahrungsmittelprodukts in den Behältern vorbei führt.

4. Vorrichtung gemäß Anspruch 1 oder 3, **dadurch gekennzeichnet, dass** die Hitzeschildvorrichtung mindestens ein Fenster bzw. eine Öffnung (17) zum Erhitzen eines Nahrungsmittelprodukts in mindestens einem Behälter aufweist.

5. Vorrichtung gemäß Anspruch 4, **dadurch gekennzeichnet, dass** jedes Fenster bzw. jede Öffnung im Wesentlichen der Größe der Öffnung jedes Behälters entspricht.

6. Vorrichtung gemäß einem der Ansprüche 3 bis 5, **dadurch gekennzeichnet, dass** die besagte Fördervorrichtung so angeordnet ist, dass sie zwischen einer gehobenen und einer gesenkten Position verstellbar ist.

7. Vorrichtung gemäß Anspruch 6, **dadurch gekennzeichnet, dass** die Hitzeschildvorrichtung zwischen allen einzelnen Positionen in einer vorgegebenen Zeitspanne verstellbar ist.

8. Vorrichtung gemäß einem der vorstehenden Ansprüche, **dadurch gekennzeichnet, dass** sie außerdem eine Vorrichtung (22) zum Abkühlen jedes Behälters oder eines Teils desselben aufweist.

9. Vorrichtung gemäß Anspruch 8, **dadurch gekennzeichnet, dass** der Teil des Behälters eine Wandung (23) darstellt.

10. Vorrichtung gemäß Anspruch 8 oder 9, **dadurch gekennzeichnet, dass** die Abkühlvorrichtung ein Mittel aufweist, um eine Kühlflüssigkeit auf jeden Behälter oder einen Teil desselben zu leiten.

11. Vorrichtung gemäß einem der Ansprüche 8 bis 10, **dadurch gekennzeichnet, dass** die Abkühlvorrichtung aus einem oder mehreren Kanälen oder einer oder mehreren Leitungen besteht, die im Wesentlichen anschließend an eine oder mehrere Wandungen jedes Behälters verlaufen.

12. Vorrichtung gemäß einem der Ansprüche 1 bis 11 zur Verwendung für das Grillen oder Bräunen einer Oberfläche des besagten Nahrungsmittelprodukts im Behälter.

13. Vorrichtung gemäß Anspruch 12, **dadurch gekennzeichnet, dass** es sich bei dem Nahrungsmittelprodukt um vorbereitete Fertignahrung handelt.

14. Vorrichtung gemäß Anspruch 12 oder 13, **dadurch gekennzeichnet, dass** das gegrillte oder gebräunte Nahrungsmittelprodukt im Mikrowellenherd erhitzt werden kann.

## Revendications

1. Appareil pour le chauffage local d'un produit alimentaire, comprenant un conteneur à ouverture culminante ou vers le haut (15), dans lequel une partie (23) du conteneur est protégée contre une surchauffe par des moyens de protection contre la chaleur (13) à travers lesquels un fluide de transfert de chaleur est amené à s'écouler, **caractérisé en ce que** les moyens de protection contre la chaleur sont aptes à être ajustés entre une position relevée et une position abaissée.

2. Appareil selon la revendication 1, dans lequel la partie du conteneur qui est protégée contre une surchauffe, est au moins une partie du périmètre du conteneur.

3. Appareil selon la revendication 1 ou 2, comprenant en outre des moyens (14) pour convoyer une pluralité de conteneurs d'un produit alimentaire au - delà d'une source de chaleur, pour chauffer une surface du produit alimentaire dans les conteneurs.

4. Appareil selon l'une des revendications 1 à 3, dans lequel les moyens de protection contre la chaleur comprennent au moins une fenêtre ou ouverture (17), pour chauffer un produit alimentaire dans au moins un conteneur.

5. Appareil selon la revendication 4, dans lequel la ou chaque fenêtre ou ouverture correspond essentiellement à la taille de l'ouverture du ou de chaque conteneur.

6. Appareil selon l'une des revendications 3 à 5, dans lequel lesdits moyens de convoyage sont aptes à être ajustés entre une position relevée et une position abaissée.

7. Appareil selon la revendication 6, dans lequel les moyens de protection contre la chaleur sont ajustables entre chaque position respective à un intervalle temporel prédéterminé.

8. Appareil selon l'une des revendications précédentes, comprenant en outre des moyens (22) pour refroidir une partie du ou de chaque conteneur.

9. Appareil selon la revendication 8, dans lequel la partie du conteneur est une paroi (23).

10. Appareil selon la revendication 8 ou 9, dans lequel les moyens de refroidissement comprennent des moyens pour diriger un liquide de refroidissement sur un partie du ou de chaque conteneur.

11. Appareil selon l'une des revendications 8 à 10, dans lequel les moyens de refroidissement prennent la forme d'un ou de plusieurs canaux ou conduits, qui sont essentiellement adjacents à une ou plusieurs parois du ou de chaque conteneur.

12. Appareil selon l'une des revendications 1 à 11, apte à griller ou roussir une surface dudit produit alimentaire dans ledit conteneur.

13. Appareil selon la revendication 12, dans lequel le produit alimentaire est un produit alimentaire complexe préparé.

14. Appareil selon la revendication 12 ou la revendication 13, dans lequel le produit alimentaire qui a été grillé ou roussi peut être soumis à un chauffage par micro - ondes.
